# EUROPÄISCHE PATENTANMELDUNG

(11) **EP 4 407 955 A1**
(43) Veröffentlichungstag der Anmeldung: **31.07.2024**
(21) Anmeldenummer: 23153058.5
(22) Anmeldetag: 24.01.2023
(51) Int. Cl.: H04L 67/303, H04L 67/55, G06N 3/02

(54) **VERFAHREN ZUM BETREIBEN VON DATENZENTRISCHEN APPLIKATIONEN IN EINEM GERÄTENETZWERK UND GERÄTENETZWERK**

(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Bei dem Verfahren zum Betreiben von mindestens einer verteilten datenzentrischen Applikation in einem Gerätenetzwerk (GENW) mit mehreren mittels Datenverbindungen miteinander verbundenen Knoten (K) mittels Publish-Subscribe-Kommunikation wird jeweils ein Kommunikationsprofil der Publish-Subscribe-Kommunikation der jeweiligen Knoten (K) erfasst und es werden abhängig von dem Kommunikationsprofil der Knoten (K) eine oder mehrere der oder die Datenverbindungen (V) der Knoten (K) miteinander neu konfiguriert.

Das Gerätenetzwerk umfasst miteinander in Kommunikationsverbindung (V) stehende Knoten (K), auf welchem mindestens eine verteilte, mittels Publish-Subscribe-Kommunikation realisierte, datenzentrische Applikation implementiert ist, wobei das Gerätenetzwerk eine als Hardware und/oder als Software realisierte Analyse- und Konfigurationskomponente aufweist, welche ein solches Verfahren auszuführen ausgebildet und eingerichtet ist.

## Beschreibung

Die Erfindung betrifft ein Verfahren zum Betreiben von datenzentrischen Applikationen in einem Gerätenetzwerk und ein Gerätenetzwerk.

Bei industriellen softwarebasierten verteilten Applikationen in industriellen Gerätenetzwerken werden Geräte nur lose miteinander verbunden, wobei die Kommunikation von Teilen der Applikation jeweils mittels brokerbasierter und/oder brokerloser Publish-Subscribe-Kommunikation realisiert wird. Bekannte Beispiele für Publish-Subscribe-Kommunikation nutzen den brokerbasierten MQTT-Standard (MQTT = (engl.) "Message Queuing Telemetry Transport"), wie er etwa im Wikipedia-Artikel zu MQTT (https://en.wikipedia.org/wiki/MQTT) beschrieben wird. Andere Beispiele nutzen den DDS-Standard (DDS = (engl.) "Data Distribution Service") der Object Management Group (OMG).

Industrielle Anwendungen erfordern typischerweise Kommunikationskanäle mit einer bestimmten Datenfluss-Qualität, im Englischen auch als "Quality of Service" (QoS) bezeichnet. Solche Datenfluss-Qualitäten umfassen, neben einer Vielzahl von Möglichkeiten, insbesondere eine vorgegebene Latenz, eine vorgegebene Verlässlichkeit und/oder eine vorgegebene Übermittlungsfrist. Insbesondere in der industriellen Automatisierungstechnik, in der SCADA-Domäne, im Militär, der Mobilität oder 5G oder 6G sind solche Datenfluss-Qualitäten relevant.

Bislang wird zur Realisierung vorgegebener Datenfluss-Qualitäten das jeweils unterliegende Gerätenetzwerk hinsichtlich der Netzwerkressourcen vergleichsweise groß dimensioniert gewählt. Dies ist allerdings nicht in jedem Anwendungsfall praktikabel und nicht bei jeder in der Praxis auftretenden Netzwerklast hinreichend.

Es ist daher Aufgabe der Erfindung, ein vor dem Hintergrund des Standes der Technik verbessertes Verfahren zum Betreiben von datenzentrischen Applikationen in einem Gerätenetzwerk anzugeben. Es ist zudem Aufgabe der Erfindung, ein verbessertes Gerätenetzwerk zu schaffen, mit welchem das verbesserte Verfahren ausgeführt werden kann.

Diese Aufgabe der Erfindung wird mit einem Verfahren zum Betreiben mindestens einer datenzentrischen Applikation in einem Gerätenetzwerk mit mehreren Knoten mit den in Anspruch 1 angegebenen Merkmalen sowie mit einem Gerätenetzwerk mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Beim erfindungsgemäßen Verfahren zum Betreiben von mindestens einer verteilten datenzentrischen Applikation in einem Gerätenetzwerk mit mehreren Knoten mittels Publish-Subscribe-Kommunikation wird ein Kommunikationsprofil der Publish-Subscribe-Kommunikation der jeweiligen Knoten erfasst und es werden abhängig von dem Kommunikationsprofil der Knoten eine oder mehrere der oder die Datenverbindungen der Knoten miteinander neu konfiguriert.

Mittels des erfindungsgemäßen Verfahrens werden also Kommunikationsprofile der unterschiedlichen Kommunikationsströme der Publish-Subscribe-Kommunikation der mindestens einen Applikation erfasst, wobei die Publish-Subscribe-Kommunikation die Kommunikation unterschiedlicher Teile der verteilten Applikation miteinander reflektiert, ggf. auf unterschiedlichen Geräten. Diese Kommunikation, einschließlich der konfigurierten Qualitäten, der unterschiedlichen Teilnehmer (Domain Participants) der Applikation können nun auf die Datenverbindungen der Knoten miteinander abgebildet werden, also auf die physikalischen Kommunikationskanäle der Knoten miteinander. Die Datenverbindungen der Knoten miteinander können nun neu konfiguriert werden.

Erfindungsgemäß können also die Kommunikationsprofile und Kommunikationsströme der Publish-Subscribe-Kommunikation herangezogen werden, um die physikalischen Datenverbindungen der Knoten miteinander neu zu konfigurieren. Erfindungsgemäß ist es also möglich, die Erfordernisse der jeweiligen verteilten Applikation hinsichtlich der Publish-Subscribe-Kommunikation heranzuziehen, um die Konfiguration des unterliegenden Gerätenetzwerks, also der Netzwerksoftware und/oder der Hardwareseite, neu zu konfigurieren.

Bei dem erfindungsgemäßen Verfahren werden die eine oder mehrere oder die Datenverbindungen der Knoten vorzugsweise derart neu konfiguriert, dass zumindest ein Kommunikationsparameter oder mehrere Kommunikationsparameter der Publish-Subscribe-Kommunikation der Knoten geändert, vorzugsweise optimiert, wird. Ein solcher Kommunikationsparameter der Publish-Subscribe-Kommunikation ist insbesondere eine Datenfluss-Qualität der Publish-Subscribe-Kommunikation, etwa eine Datenfluss-Qualität von einer oder mehrerer Publish-Subscribe-Verbindungen der Publish-Subscribe-Kommunikation. Vorzugsweise ist ein Kommunikationsparameter eine Kommunikation von Datenfluss-Qualitäten für eine oder mehrere Publish-Subscribe-Verbindungen der Publish-Subscribe-Kommunikation.

Besonders zweckmäßig werden die Datenverbindungen der Knoten miteinander derart neu konfiguriert, dass die Publish-Subscribe-Kommunikation hinsichtlich des Kommunikationsparameters verbessert oder optimiert wird.

Geeigneterweise umfassen bei dem erfindungsgemäßen Verfahren die Datenverbindungen drahtbasierte Verbindungen und/oder drahtlose Verbindungen, insbesondere 5G- und/oder 6G-Verbindungen. Insbesondere umfassen die Datenverbindungen mehrere oder sämtliche der vorgenannten Verbindungen. Vorteilhaft können solche Datenverbindungen derart neu konfiguriert werden, dass die zur Verfügung stehenden Verbindungen hinsichtlich der Publish-Subscribe-Kommunikation optimal genutzt werden.

In einer vorteilhaften Weiterbildung ist bei dem erfindungsgemäßen Verfahren die Publish-Subscribe-Kommunikation, zumindest zum Teil, gemäß dem DDS-Standard realisiert. Alternativ oder zusätzlich und ebenfalls bevorzugt ist bei dem erfindungsgemäßen Verfahren die Publish-Subscribe-Kommunikation, zumindest zum Teil, gemäß dem MQTT-Standard realisiert.

Besonders bevorzugt werden bei dem erfindungsgemäßen Verfahren die Kommunikationsprofile derart erfasst, dass die Knoten vorzugsweise zur Ermittlung des Kommunikationsprofils mittels einer Publish-Subscribe-Middleware aufgefordert werden und dass die Knoten zum Senden des Kommunikationsprofils aufgefordert werden.

Vorteilhaft weist eine Publish-Subscribe-Middleware eine Monitoring-Komponente für Publish-Subscribe-Kommunikation auf. Diese Monitoring-Komponente erhält diejenigen Daten zur Publish-Subscribe-Kommunikation, die die Nutzung von Publish-Subscribe-Kommunikation des jeweiligen Knotens, auf welchem die Publish-Subscribe-Middleware implementiert ist, charakterisieren. Insbesondere zählen zu diesen Daten die Größe und/oder die Frequenz und/oder Übertragungsrate der jeweils übertragenen Nutzdaten. Diese Daten bilden zusammengenommen jeweils ein Kommunikationsprofil des Knotens hinsichtlich der Publish-Subscribe-Kommunikation. Solche Kommunikationsprofile können auf die Erfordernisse der Datenverbindungen der Knoten miteinander mittels einer Abbildung abgebildet werden. Eine solche Abbildung, etwa in Gestalt einer Abbildungsfunktion und/oder einer Zuordnungstabelle und/oder eines für eine solche Zuordnung trainierten neuronalen Netzes wird zweckmäßig bei der Erfindung herangezogen.

Bevorzugt werden Kommunikationsprofile derart erfasst, dass die Kommunikationsprofile als von den Knoten gesendete Kommunikationsprofile empfangen werden oder dass die Kommunikationsprofile aus dem Knoten ausgelesen werden.

Bei dem erfindungsgemäßen Verfahren wird in einer vorteilhaften Weiterbildung der Erfindung abhängig von den Kommunikationsprofilen der Knoten ein Kommunikationsmodell des Gerätenetzwerks bestimmt und abhängig von dem Kommunikationsmodell eine neue Konfiguration der Datenverbindungen bestimmt. In dieser Weiterbildung der Erfindung kann das Kommunikationsmodell des Gerätenetzwerks als digitaler Zwilling des Gerätenetzwerk dienen und die Datenverbindungen des Gerätenetzwerks können geeigneterweise mittels des digitalen Zwillings hinsichtlich unterschiedlicher Kandidatenkonfigurationen testweise konfiguriert werden. Wird eine geeignete, verbesserte Konfiguration für die Datenverbindungen des Gerätenetzwerks gefunden, so wird diese Konfiguration zweckmäßig gewählt und das Gerätenetzwerk schließlich mit dieser Konfiguration konfiguriert.

In einer bevorzugten Weiterbildung des erfindungsgemäßen Verfahrens wird abhängig von den Kommunikationsprofilen der Knoten eine neue Konfiguration der Datenverbindungen mittels eines neuronalen Netzes bestimmt. Auf diese Weise kann eine aufwendige explizite Bestimmung eines Kommunikationsmodells unterbleiben und durch ein Training eines neuronalen Netzes ersetzt werden. Das neuronale Netz wird zweckmäßig mit Kommunikationsprofilen und vorzugsweise mit einer bestehenden Konfiguration der Kommunikationsverbindungen trainiert, sodass das neuronale Netz eine Konfiguration, etwa in Form von Konfigurationsdaten, ausgibt, die einen Kommunikationsparameter wie vorhergehend beschrieben verbessern oder optimieren.

Bei dem erfindungsgemäßen Verfahren bilden die Kommunikationsprofile der Knoten und/oder eine bestehende Konfiguration der Datenverbindungen Eingangsdaten für das neuronale Netz. Mittels des zuvor beschriebenen Trainings des neuronalen Netzes ist das neuronale Netz für diese Weiterbildung der Erfindung geeignet trainiert.

Bevorzugt ist das erfindungsgemäße Verfahren computer-implementiert.

Bevorzugt wird das erfindungsgemäße Verfahren kontinuierlich oder wiederholt durchgeführt. Auf diese Weise kann das erfindungsgemäße Verfahren auf Änderungen des Netzwerks und/oder der zumindest einer Applikation flexibel und zeitnah reagieren.

Das erfindungsgemäße Gerätenetzwerk umfasst miteinander in Datenverbindung stehende Knoten, auf welchem mindestens eine verteilte, mittels Publish-Subscribe-Kommunikation realisierte, datenzentrische Applikation implementiert ist, wobei das Gerätenetzwerk eine als Hardware und/oder als Software realisierte Analyse- und Konfigurationskomponente aufweist, welche ein erfindungsgemäßes Verfahren wie vorhergehend beschrieben auszuführen ausgebildet und eingerichtet ist.

Nachfolgend wird die Erfindung anhand in der Zeichnung dargestellter Ausführungsbeispiele näher erläutert.

Es zeigen:
- Fig. 1: ein gekoppeltes Gerätenetzwerk zur datenzentrischen Kommunikation zur Ausführung des erfindungsgemäßen Verfahrens zum Betreiben mindestens einer verteilten Applikation schematisch in einer diagrammatischen Darstellung und
- Fig. 2: das erfindungsgemäße Verfahren zum Betreiben mindestens einer verteilten Applikation schematisch in einer Prinzipskizze.

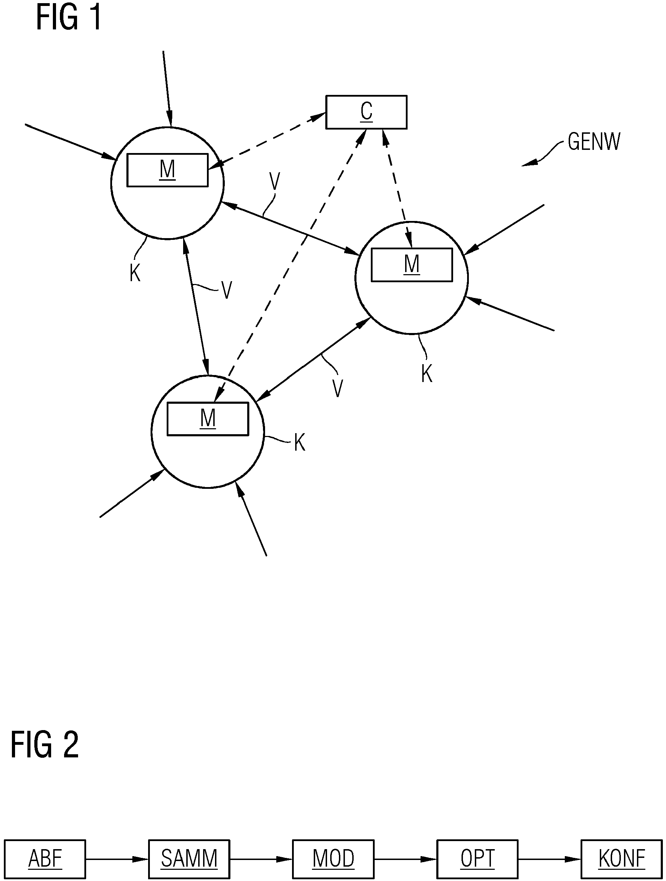

Das in Fig. 1 dargestellte gekoppelte Gerätenetzwerk GENW umfasst mehrere miteinander gekoppelte Geräte, welche Knoten K des Gerätenetzwerks GENW bilden.

Auf den Gerätenetzwerk GENW werden verteilte Applikationen betrieben, welche jeweils mehrere auf unterschiedlichen Knoten realisierte Teile der Applikation umfassen, die miteinander mittels eines datenzentrischen Kommunikationsverfahrens mit Datenverbindungen V in Verbindung stehen. Im dargestellten Ausführungsbeispiel ist das datenzentrierte Kommunikationsverfahren ein Publish-Subscribe-Verfahren. Die Datenverbindungen V sind im Gerätenetzwerk teilweise drahtlos, etwa mittels 5G oder 6G, und teilweise drahtgebunden realisiert.

Vorliegend genügt das datenzentrische Publish-Subscribe-Verfahren dem DDS-Standard. In weiteren, nicht eigens dargestellten Ausführungsbeispielen, welche im Übrigen dem dargestellten Ausführungsbeispiel entsprechen, genügt das datenzentrische Publish-Subscribe-Verfahren dem MQTT-Standard.

Die Publish-Subscribe-Middleware, welche auf dem Knoten K implementiert ist, umfasst eine Verkehrs-Monitor-Komponente M, welche das Kommunikationsprofil des jeweiligen Knotens K hinsichtlich der Publish-Subscribe-Kommunikation des Knotens K überwacht. Die Publish-Verbindungen des Knotens K und die Subscribe-Verbindungen des Knotens K werden dazu von der Verkehrs-Monitor-Komponente M des jeweiligen Knotens beobachtet und es wird sowohl der jeweilige Umfang der Publish-Subscribe-Verbindung festgehalten und es werden zudem die Frequenz in der Nutzung der Publish-Subscribe-Kommunikation sowie zeitliche Muster in der Nutzung der Publish-Subscribe-Verbindung von der Verkehrs-Monitoring-Komponente M festgehalten.

Das Gerätenetzwerk GENW umfasst zudem eine Netzwerkanalyse-Komponente C, welche im dargestellten Ausführungsbeispiel als separate physikalische Komponente dargestellt ist. In weiteren, nicht eigens dargestellten Ausführungsbeispielen kann die Netzwerkanalyse-Komponente C als Software-Komponente ausgebildet sein, welche entweder auf einem Knoten K betrieben wird oder welche ihrerseits als weitere verteilte Applikation über mehrere Knoten K verteilt auf dem Gerätenetzwerk GENW implementiert ist.

Die Netzwerkanalyse-Komponente C steht mit sämtlichen Verkehrs-Monitoring-Komponenten M in Datenverbindung (gestrichelt in Fig. 1 dargestellt) und fragt von jedem Knoten K das jeweilige Kommunikationsprofil des Knotens K ab.

Die Netzwerkanalyse-Komponente C umfasst eine nicht eigens dargestellte Topologiemodellierungs-Komponente. Die Topologiemodellierungs-Komponente nimmt die Kommunikationsprofile sämtlicher Knoten K entgegen und berechnet ein Kommunikationsmodell des gesamten Gerätenetzwerks GENW. Das Kommunikationsmodell nimmt zusätzlich die gegenwärtig auf dem Gerätenetzwerk GGENW implementierte Konfiguration der Datenverbindungen V der Knoten K miteinander entgegen und berechnet eine optimierte, alternative, Konfiguration, um die Publish-Subscribe-Kommunikation hinsichtlich eines Güteparameters zu optimieren. Ein solcher Güteparameter kann etwa in der Erfüllung eines Gesamtmaßes für Datenfluss-Qualitäten in der Art eines Quality-of-Service der Publish-Subscribe-Kommunikation bestehen. Alternativ oder als zusätzliches gewichtetes Kriterium kann beispielsweise eine möglichst effiziente Ressourcennutzung der Datenverbindungen V des Gerätenetzwerks GENW herangezogen werden.

Die Netzwerkanalyse-Komponente C zieht dazu ein neuronales Netz heran, welches zur Ausgabe einer hinsichtlich des jeweiligen Güteparameters optimierten Konfiguration der Datenverbindungen V des Gerätenetzwerks trainiert ist und dazu als Trainingsdaten die Kommunikationsprofile der Knoten K sowie die aktuelle Konfiguration der Datenverbindungen V des Gerätenetzwerks GENW entgegennimmt. Insoweit bildet das trainierte neuronale Netz implizit das Kommunikationsmodell des Gerätenetzwerks GENW. In weiteren Ausführungsbeispielen liegt das Gerätenetzwerk GENW explizit als Algorithmus vor.

In weiteren, nicht eigens dargestellten Ausführungsbeispielen umfasst die Netzwerkanalyse-Komponente C kein neuronales Netz, sondern implementiert stattdessen einen Optimierungsalgorithmus nach Standardverfahren zur Ausgabe einer optimierten Konfiguration. Im einfachsten Fall können leicht geänderte Konfigurationen mit dem in diesem Falle explizit vorliegenden, berechneten, Kommunikationsmodell getestet und validiert werden und diejenige Konfiguration, welche den Güteparameter optimiert, wird als neu einzurichtende Konfiguration des Gerätenetzwerks herangezogen.

Mittels der so von der Netzwerkanalyse-Komponente C ermittelten neuen Konfiguration wird das Gerätenetzwerk GENW optimiert.

Dieses anhand von Fig. 1 erläuterte Verfahren ist schematisch in Fig. 2 abgebildet, wobei das erfindungsgemäße Verfahren von der Netzwerkanalyse-Komponente C durchgeführt wird:
In einem ersten Abfrageschritt fragt die Netzwerkanalyse-Komponente C von jedem Knoten K das Kommunikationsprofil des Knotens K ab, welches der Knoten K mittels der auf ihm implementierten Publish-Subscribe-Middleware gewinnt.

In einem Vorbereitungsschritt SAMM fasst die Netzwerkanalyse-Komponente C die Kommunikationsprofile der Knoten K zusammen und präpariert gemeinsam mit der gegenwärtigen Konfiguration der Datenverbindungen V des Gerätenetzwerks GENW Eingangsdaten zur Berechnung eines Kommunikationsmodells.

In einem Modellierungsschritt MOD wird durch die Netzwerkanalyse-Komponente C das Kommunikationsmodell berechnet.

In einem Optimierungsschritt OPT wird mittels des Kommunikationsmodells eine optimierte Konfiguration des Gerätenetzwerks ermittelt.

Es versteht sich, dass im Falle einer Netzwerkanalyse-Komponente C, welche mit einem neuronalen Netz realisiert ist, der Modellierungsschritt MOD und der Optimierungsschritt OPT wie oben beschrieben gemeinsam durchgeführt werden kann, sodass der Modellierungsschritt MOD implizit im trainierten neuronalen Netz vorliegt.

Mittels der derart optimierten Konfiguration wird das Gerätenetzwerk GENW in einem Konfigurationsschritt KONF konfiguriert.

## Patentansprüche

1. Verfahren zum Betreiben von mindestens einer verteilten datenzentrischen Applikation in einem Gerätenetzwerk (GENW) mit mehreren mittels Datenverbindungen miteinander verbundenen Knoten (K) mittels Publish-Subscribe-Kommunikation, bei welchem jeweils ein Kommunikationsprofil der Publish-Subscribe-Kommunikation der jeweiligen Knoten (K) erfasst wird und bei welchem abhängig von dem Kommunikationsprofil der Knoten (K) eine oder mehrere der oder die Datenverbindungen (V) der Knoten (K) miteinander neu konfiguriert werden.

2. Verfahren nach dem vorhergehenden Anspruch, bei welchem die eine oder mehrere oder die Datenverbindungen (V) der Knoten (K) derart neu konfiguriert werden, dass zumindest ein Kommunikationsparameter oder mehrere Kommunikationsparameter der Publish-Subscribe-Kommunikation der Knoten geändert, vorzugsweise optimiert, wird.

3. Verfahren nach dem vorhergehenden Anspruch, bei welchem die Datenverbindungen drahtbasierte Verbindungen und/oder drahtlose Verbindungen, insbesondere 5G- und/oder 6G-Verbindungen, umfassen.

4. Verfahren nach einem der vorhergehenden Ansprüche, bei welchem die Publish-Subscribe-Kommunikation gemäß dem DDS-Standard und/oder gemäß dem MQTT-Standard realisiert ist.

5. Verfahren nach einem der vorhergehenden Ansprüche, bei welchem die Kommunikationsprofile derart erfasst werden, dass vorzugsweise die Knoten zur Ermittlung des Kommunikationsprofils mittels einer Publish-Subscribe-Middleware aufgefordert werden und dass die Knoten zum Senden des Kommunikationsprofils aufgefordert werden.

6. Verfahren nach einem der vorhergehenden Ansprüche, bei welchem die Kommunikationsprofile derart erfasst werden, dass die Kommunikationsprofile als von den Knoten gesendete Kommunikationsprofile empfangen werden oder die Kommunikationsprofile aus dem Knoten ausgelesen werden.

7. Verfahren nach einem der vorhergehenden Ansprüche, bei welchem abhängig von den Kommunikationsprofilen der Knoten (K) ein Kommunikationsmodell des Gerätenetzwerks (GENW) bestimmt wird und abhängig von dem Kommunikationsmodell eine neue Konfiguration der Datenverbindungen (V) bestimmt wird.

8. Verfahren nach einem der vorhergehenden Ansprüche, bei welchem abhängig von den Kommunikationsprofilen der Knoten (K) eine neue Konfiguration der Datenverbindungen (V) mittels eines neuronalen Netzes bestimmt wird.

9. Verfahren nach einem der vorhergehenden Ansprüche, bei welchem die Kommunikationsprofile der Knoten (K) und/oder eine bestehende Konfiguration der Datenverbindungen (V) Eingangsdaten für das neuronale Netz bilden.

10. Verfahren nach einem der vorhergehenden Ansprüche, welches computer-implementiert ist.

11. Gerätenetzwerk, umfassend miteinander in Kommunikationsverbindung (V) stehende Knoten (K), auf welchem mindestens eine verteilte, mittels Publish-Subscribe-Kommunikation realisierte, datenzentrische Applikation implementiert ist, wobei das Gerätenetzwerk eine als Hardware und/oder als Software realisierte Analyse- und Konfigurationskomponente aufweist, welche ein Verfahren nach einem der vorhergehenden Ansprüche auszuführen ausgebildet und eingerichtet ist.
